**Europäisches Patentamt**

**European Patent Office**

**Office européen des brevets**

(19)

(11) Numéro de publication : **0 027 086**
**B1**

(12) **FASCICULE DE BREVET EUROPÉEN**

(45) Date de publication du fascicule du brevet :
26.10.83

(51) Int. Cl.³ : **B 62 D 35/00**

(21) Numéro de dépôt : **80401415.7**

(22) Date de dépôt : **03.10.80**

(54) **Dispositif anti-remous pour véhicule tracteur.**

(30) Priorité : 08.10.79 FR 7924961

(43) Date de publication de la demande :
15.04.81 Bulletin 81/15

(45) Mention de la délivrance du brevet :
26.10.83 Bulletin 83/43

(84) Etats contractants désignés :
DE GB IT SE

(56) Documents cités :
FR A 2 334 555
GB A 1 532 283
US A 3 711 146
US A 3 834 752

(73) Titulaire : **Levassor, Jean**
**11 Villa Molitor**
**F-75016 Paris (FR)**

(72) Inventeur : **Levassor, Jean**
**11 Villa Molitor**
**F-75016 Paris (FR)**

(74) Mandataire : **Guyard, Alain**
**Cabinet Technique CH. ASSI & L. GENES 41 rue des**
**Martyrs**
**F-75009 Paris (FR)**

Jouve, 18, rue St-Denis, 75001 Paris, France

Dispositif anti-remous pour véhicule tracteur

La présente invention concerne des véhicules tracteurs et elle s'applique notamment aux véhicules routiers qui tractent une remorque, par exemple une remorque de camping ou une remorque de camion.

On sait que la zone comprise entre le véhicule et sa remorque est le siège de remous qui entraînent une consommation supplémentaire de carburant et qui sont préjudiciables à la bonne tenue de route de la remorque.

On connaît un dispositif pour réduire la formation de remous qui comprend un déflecteur fixé sur le dessus du véhicule tracteur : ce déflecteur n'apporte qu'une solution très partielle au problème des remous, et son efficacité décroît fortement lorsque le véhicule et sa remorque ne sont plus alignés.

On connaît également, par le brevet US-A-3 834 752, un ensemble tracteur et remorque ou semi-remorque, et par le brevet US-A-3 711 146 un ensemble tracteur et semi-remorque, comprenant tous deux une nappe non rigide, montée de façon étanche sur les côtés et le dessus d'une section transversale du véhicule et fixée en permanence à l'un des éléments accouplés et de façon mobile à l'autre ; dans le premier cas, on utilise un dispositif de verrouillage compliqué, et dans le second une nappe inférieure empêche toute entrée d'air dans le dispositif qui relie le tracteur à la remorque, afin d'éviter la formation de remous.

La présente invention vise à fournir un dispositif d'une efficacité permanente et supérieure à celles des dispositifs décrits dans les brevets précités.

Par rapport aux brevets US précités qui, pour éviter la formation de remous entre un véhicule tracteur et un véhicule tracté, décrivent déjà une nappe non rigide fixée de façon étanche sur les côtés et le dessus d'une section transversale du véhicule tracteur, qui s'étend vers l'arrière et entoure la partie avant du véhicule tracté, la présente invention est caractérisée en ce que la nappe est fixée au véhicule tracté par des ressorts qui la maintiennent tendue dans toutes les positions relatives des deux véhicules.

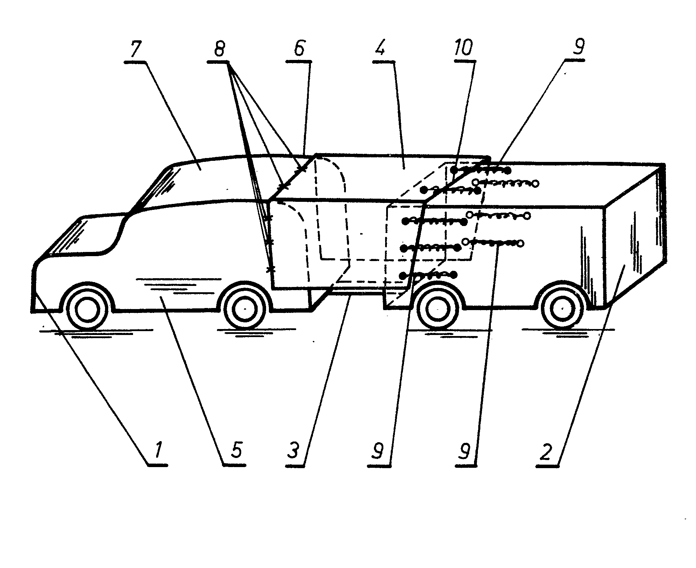

La figure unique du dessin joint est une illustration d'un dispositif conforme à l'invention.

Sur la figure, on a représenté un véhicule tracteur 1 qui tire une remorque 2 au moyen d'un attelage représenté schématiquement en 3.

Une nappe 4 non rigide est maintenue appliquée sur les deux côtés 5, 6 et le dessus 7 du véhicule tracteur ; les moyens de fixation de la nappe au véhicule tracteur sont des moyens quelconques connus en soi, la préférence étant donnée aux moyens qui assurent un excellent placage de la nappe sur la paroi du véhicule. On utilise par exemple un profilé fixé au véhicule tracteur le long de la section transversale, ce profilé recevant à encastrement ou à pincement le bord de la nappe.

En variante, on utilise des fixations ponctuelles comme les fixations 8 représentées sur la figure.

Il est préférable que les fixations permettent de poser ou de déposer la nappe à volonté et facilement.

La nappe s'étend vers l'arrière et entoure le devant de la remorque 2 et elle est flottante sur la remorque mais est maintenue tendue par une série de ressorts 9 qui relient le bords arrière 10 de la nappe aux flancs et au toit de la remorque.

Si on le désire, on constitue la nappe sous la forme d'un fourreau qui entoure complètement la partie arrière du véhicule tracteur et la partie avant de la remorque y compris les dessous.

Le bord avant de la nappe souple est positionné à tout endroit voulu de la moitié arrière du véhicule tracteur, l'endroit étant choisi selon la nature et la conformation du véhicule pour que la nappe ne soit pas gênante et s'applique facilement sur les côtés du véhicule. Par exemple, la section transversale au niveau de laquelle se trouve son bord avant est située dans la région de l'essieu arrière ou en arrière de cet essieu.

La nappe est d'un seul tenant ou est composée de panneaux ; par exemple, on réalise une forme simplifiée de l'invention en utilisant au lieu d'une unique nappe ou fourreau des panneaux non rigides fixés séparément, de la même manière, un sur le dessus des véhicules, un sur chaque côté des véhicules et si possible un sur le dessous des véhicules, ou des panneaux rigides articulés entre eux pour que l'ensemble des panneaux soit non rigide.

La nappe est en une matière quelconque appropriée : matière plastique, métal, tissu, etc.

Les ressorts 9 sont par exemple des ressorts de type sandow.

**Revendication**

Dispositif pour éviter la formation de remous entre un véhicule tracteur (1) et un véhicule tracté (2), en particulier des véhicules routiers, comportant : une nappe (4) non rigide, fixée de façon étanche sur les côtés (5, 6) et le dessus (7) d'une section transversale du véhicule tracteur, cette nappe s'étendant vers l'arrière et entourant la partie avant du véhicule tracté, et caractérisé en ce que la nappe (4) est fixée au véhicule tracté par des ressorts (9) qui la maintiennent tendue dans toutes les positions relatives des deux véhicules.

**Claim**

Device for avoiding the formation of vortex between a tractor vehicle (1) and a driven vehicle (2), particularly track vehicles, comprising ; a non-rigid sheet (4), tightly fixed on the sides (5, 6) and on the upper part (7) of a cross-section of the tractor vehicle, said sheet extending abaft and surrounding the front part of the driven vehicle, and characterized in that the sheet (4) is fixed to the driven vehicle by springs (9) which are holding said sheet stretched in all the relative positions of the both vehicles.

**Anspruch**

Antiwirbel-Vorrichtung, um die Bildung von Wirbeln zwischen einen Zugwagen (1) und einen gezogenen Wagen (2), besonders Strassenfahrzeuge, zu vermeiden, welche eine unsteife, wasserdicht auf den Seiten (5, 6) und auf dem obersten Teil (7) eines querhindurchgehenden Abschnitts der Zugmaschine befestigte Verbindung (4) besitzt, welche sich nach dem hinteren Teil erstreckt und den vorderen Teil des gezogenen Wagens einfasst, und dadurch gekennzeichnet, dass die Verbindung (4) am gezogenen Wagen durch Feder (9) befestigt wird, welche sie in allen verhältnismässigen Lagen der beiden Wagen im gezogenen Stand festhalten.

# 0 027 086